(19) 

**Europäisches Patentamt**
**European Patent Office**
**Office européen des brevets**

(11) **EP 2 402 408 A1**

(12) **EUROPEAN PATENT APPLICATION**
published in accordance with Art. 153(4) EPC

(43) Date of publication:
**04.01.2012 Bulletin 2012/01**

(21) Application number: **10746172.5**

(22) Date of filing: **22.02.2010**

(51) Int Cl.:
*C09J 133/00* (2006.01)     *C09J 7/02* (2006.01)
*C09J 171/02* (2006.01)

(86) International application number:
**PCT/JP2010/052648**

(87) International publication number:
**WO 2010/098291 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.02.2009 JP 2009043988**
                **15.02.2010 JP 2010030117**

(71) Applicant: **Nitto Denko Corporation**
**Ibaraki-shi,**
**Osaka 567-8680 (JP)**

(72) Inventors:
• **YAMAGATA, Masato**
**Ibaraki-shi**
**Osaka 567-8680 (JP)**
• **UKEI, Natsuki**
**Ibaraki-shi**
**Osaka 567-8680 (JP)**

• **KATAOKA, Kenichi**
**Ibaraki-shi**
**Osaka 567-8680 (JP)**
• **NIIMI, Kenjiro**
**Ibaraki-shi**
**Osaka 567-8680 (JP)**
• **HARUTA, Hiromoto**
**Ibaraki-shi**
**Osaka 567-8680 (JP)**
• **NAKANO, Junko**
**Ibaraki-shi**
**Osaka 567-8680 (JP)**
• **INOUE, Tsuyoshi**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

(54) **ADHESIVE COMPOSITION FOR USE IN SURFACE PROTECTIVE FILM AND USE THEREOF**

(57)     The present invention provides a surface protective film that exhibits small differences in peel strength on account of the surface state of an adherend and that is excellent in anti-contamination to adherends, and a pressure-sensitive adhesive (PSA) composition for the protective film. The PSA composition provided by the present invention comprises 0.01 to 5 parts by weight of a compound containing an oxypropylene group with respect to 100 parts by weight of an acrylic polymer as a base polymer. A surface protective film 10 provided by the present invention has a PSA layer 2, formed using the above PSA composition, on one or both sides of a support 1 .

[Fig 1]

FIG.1

**EP 2 402 408 A1**

**Description**

TECHNICAL FIELD

The present invention relates to a surface protective film that exhibits small differences in peel strength on account of the surface state of an adherend and that is excellent in anti-contamination to adherends. The present invention relates also to a pressure-sensitive adhesive (PSA) composition for such a surface protective film.
This application claims priority to Japanese Patent Application No. 2009-043988 filed on 26 February, 2009, and Japanese Patent Application No. 2010-030117, filed on 15 February, 2010, the entire contents of which are incorporated herein by reference.
Surface protective films (to also be referred to as surface protective sheets) typically have a configuration in which a PSA is provided on a film-shaped support. These protective films are laminated to an adherend by means of a PSA as described above, and are therefore used for the purpose of protecting the adherend from damage and soiling during processing or transport. For example, liquid crystal display panels are formed by laminating optical members such as a polarizing plate or retardation plate to liquid crystal cells by means of PSA. Protective films are laminated to these optical members laminated to the liquid crystal cells by means of PSA for the purpose of preventing damage, soiling and the like. These protective films are then removed by being peeled from the optical members (adherends) together with the PSA at the stage the protective films are no longer required such as when the optical members are laminated to the liquid crystal cells. Examples of technical literatures relating to surface protective films include Patent documents 1 and 2. Patent document 3 relates to a technology for improving moisture permeability of a PSA layer.
Patent document 1 Japanese Patent Application Publication No. 2008-69261
Patent document 2: Japanese Patent Application Publication No. 2005-23143
Patent document 3: Japanese Patent Application Publication No. H 11-116927

DISCLOSURE OF THE INVENTION

Protective films that are adhered to an adherend exhibit peel strength, upon stripping off the adherend, that differs depending on the shape of the surface of the adherend and on the polarity of the constituent material of the surface. This feature will be explained next on the basis of a specific example in which the adherend is a polarizing plate. Ordinarily, polarizing plates have a structure in which a protective layer comprising triacetyl cellulose (TAC) is adhered to a polarizer comprising polyvinyl alcohol (PVA), via a PSA. This protective layer may fulfill some given function, depending on the intended application. For instance, an antiglare (AG) coating in which fine irregularities are formed may be applied to the protective layer in order to reduce glare from ambient light. Ordinarily, the AG coating is made up of a material having lower polarity than TAC. Therefore, the surface (TAC side) of polarizing plates that have no such functions (plain polarizing plates) are smooth surfaces of comparatively high polarity, whereas the surface (AG side) of polarizing plates subjected to AG coating (AG polarizing plate) is an irregular surface having relatively low polarity. These surface state discrepancies are likely to result in clear differences in the peel strength of a protective film between a TAC side and an AG side. Such peel strength differences may translate into poorer efficiency in the operation of stripping the protective film off the polarizing plate. Moreover, costs are incurred when peel strength is equalized by using different protective films according to the surface state.
Patent document 1 describes that differences in adhesiveness can be reduced according to the surface state of an adherend and the like by a PSA composition containing a (meth)acrylic polymer, obtained by copolymerizing a monomer having an alkylene oxide structure, and an ionic liquid salt. However, this technology demonstrates this effect by having a ionic liquid salt as an essential constituent thereof (paragraphs 0061 to 0062 of Patent document 1), and in actuality, according to studies conducted by the present inventor, a PSA composition in which the ionic liquid salt has been excluded from the composition of Patent document 1 was confirmed to not allow the obtaining of the effect of reducing differences in adhesiveness attributable to differences in surface state. In order to realize soiling resistance to an adherend at a high level, it is desirable to avoid a composition that essentially requires the use of an ionic liquid salt. Patent document 2 relates to a technology for reducing dependency of peel strength on peeling speed by lowering high-speed peeling strength, not for reducing differences in peel strength caused by differences in surface state of an adherend.
It is an object of the present invention to provide a PSA composition capable of forming a surface protective film that boasts small differences in peel strength on account of the surface state of an adherend and that is excellent in anti-contamination to adherends, such that the PSA composition can be used as a composition that contains no ionic liquid salt. A further object of the present invention is to provide a method of producing such a PSA composition. Yet another object of the invention is to provide a surface protective film obtained by using the above PSA composition.
The present invention provides a PSA composition for surface protective films (typically, a PSA composition for forming a PSA layer on one or both sides of a surface protective film). The PSA composition comprises an acrylic polymer, as a base polymer, and a compound containing an oxypropylene group (preferably, a compound having a moiety (polyoxypropylene segment) of two or more consecutive oxypropylene units). The content of the oxypropylene group-containing compound can be set to about 0.01 to 5 parts by weight with respect to 100 parts by weight of the above acrylic polymer. A PSA formed using such a PSA composition (typically, a PSA resulting from cross-linking of the above-mentioned acrylic polymer) allows realizing a surface protective film that boasts small differences in peel strength on account of the surface state of an adherend (object to be protected) and that is excellent in anti-contamination to adherends.

In a preferred aspect of the technology disclosed herein, there is used a compound having a number-average molecular weight (Mn) ranging from $0.2 \times 10^3$ to $10 \times 10^3$ as the oxypropylene group-containing compound. An oxypropylene group-containing compound having a Mn lying within the above range is excellent in compatibility with the base polymer. Therefore, a PSA composition comprising such an oxypropylene group-containing compound allows forming a surface protective film that exhibits particularly high level of anti-contamination.

As the oxypropylene group-containing compound there can be preferably used, for instance, polypropylene glycol (PPG), or a compound having a polyoxypropylene segment and a polyoxyethylene segment (for instance, a PPG-polyethylene glycol-PPG block copolymer).

As the acrylic polymer of the technology disclosed herein there can be preferably used an acrylic polymer that results from copolymerizing an acrylic monomer having a hydroxyl group. A PSA composition comprising such a copolymer composition allows easily controlling the cross-linking state (for instance, degree and pattern of cross-linking) by way of the above-mentioned hydroxyl group. Therefore, a surface protective film provided with a PSA obtained by using such a PSA composition affords better performance (for instance, in terms of striking a superior balance between good adhesiveness to the surface of an adherend and low peel strength upon stripping and removal from the adherend).

The PSA composition disclosed herein may contain a compound that exhibits keto-enol tautomerism (typically, a β-dicarbonyl compound). In a PSA composition comprising a crosslinking agent (for instance, an isocyanate compound) or in a PSA composition that can be used with a crosslinking agent blended thereinto, the above feature allows suppressing excessive viscosity increases or gelling of the PSA composition after blending of the crosslinking agent thereinto.

The present invention provides also a method of producing a PSA composition for surface protective films. The method comprises a step of preparing an acrylic polymer as a base polymer and a step of mixing the acrylic polymer with a compound containing an oxypropylene group (preferably, the abovementioned compound having a polyoxypropylene segment). The blending amount of the oxypropylene group-containing compound can be set to 0.01 to 5 parts by weight per 100 parts by weight of the acrylic polymer. The above method is used as a method of producing any of the PSA compositions disclosed herein.

The present invention provides a surface protective film wherein a PSA layer formed using any of the PSA compositions disclosed herein is provided on one or both sides of a support. Such a protective film can boast small differences in peel strength on account of the surface state of an adherend, and can be excellent in anti-contamination to adherends. In another aspect, the present invention provides a method of producing a surface protective film that comprises the steps of preparing any of the PSA compositions disclosed herein (which may be a PSA composition produced in accordance with any of the methods disclosed herein), and providing a PSA layer obtained using the foregoing composition on one or both sides of a support.

A support formed of a synthetic resin film that has been subjected to antistatic treatment can be preferably used for the support. Since synthetic resin films are easily charged by static electricity, the use of a synthetic resin film that has been subjected to antistatic treatment is particularly preferable in surface protective films used in applications sensitive to static electricity such as in electronic equipment or liquid crystal materials.

In a preferred aspect of the surface protective film disclosed herein, a ratio (S1/S2) between a peel strength S1 from a TAC polarizing plate and peel strength S2 from an AG polarizing plate measured in accordance with the method set forth in the examples described below is smaller than 2 (and that ranges typically from 0.5 to less then 2, for instance from 1 to less than 2). More preferably, the peel strength ratio is about 1.8 or less (and ranges typically from about 0.8 to 1.8, for instance from about 1 to 1.8).

## BRIEF DESCRIPTION OF THE DRAWINGS

FIG. 1 is a schematic cross-sectional view showing an example of the configuration of a surface protective film according to the present invention;
FIG. 2 is a schematic cross-sectional view showing another example of the configuration of a surface protective film according to the present invention;

BEST MODE FOR CARRYING OUT THE INVENTION

Preferred embodiments of the present invention will be described below. Technical matters necessary to practice the invention, other than those specifically referred to in the present description, may be understood as design matters for a person skilled in the art that are based on the related art in the pertinent field. The present invention may be practiced based on the contents disclosed herein and common general technical knowledge in the pertinent field. Embodiments described in the drawings are schematic representations for providing a clear explanation of the present invention, and do not accurately represent the size or scale of the surface protective film of the present invention actually provided as a product.

The PSA composition disclosed herein is **characterized in that** an acrylic polymer, as a base polymer, has blended thereinto an compound having at least one unit of a oxypropylene group ($-OC_3H_6-$, typically $-OCH_2CH(CH_3)-$), i.e. a oxypropylene group-containing compound. In a preferred aspect, the compound used as the oxypropylene group-containing compound has a moiety of two or more consecutive oxypropylene units (namely, a structural moiety represented by $-(OC_3H_6)_n-$, wherein that $n \geq 2$). Hereafter, the moiety having two or more consecutive oxypropylene units may also be referred to as "polyoxypropylene segment". Likewise, a moiety having two or more consecutive oxyethylene units ($-OC_2H_4-$, and typically, $-OCH_2CH_2-$) may be referred to as a "polyoxyethylene segment".

The oxypropylene group-containing compound in the technology disclosed herein can be a single material, out of various known materials, having the above-described structure, or a suitable combination of such materials. For instance, there can be used polypropylene glycol (PPG), compounds containing oxypropylene units and oxyethylene units (wherein the arrangement of these units may be a random or block arrangement), as well as derivatives of the foregoing. PPG having diol, triol or hexaol molecular structures can be used as the PPG. Compounds containing oxypropylene units and oxyethylene units in which the number of oxypropylene units accounts for 50% or more of the total number of these units are preferably used as the compound containing oxypropylene units and oxyethylene units. Preferably, the compound comprises both a polyoxypropylene segment and a polyoxyethylene segment. Specific examples of such compounds include PPG-polyethylene glycol (PEG)-PPG block copolymers, PPG-PEG block copolymers and PEG-PPG-PEG block copolymers. Examples of the abovementioned derivatives include oxypropylene group-containing compounds having etherified ends (such as PPG monoalkyl ethers or PEG-PPG monoalkyl ethers), and oxypropylene group-containing compounds having acetylated ends (for instance, terminal-acetylated PPG).

The oxypropylene group-containing compound is typically used by being added to, and mixed with, an acrylic polymer polymerized (synthesized) beforehand. Therefore, unlike in the case in which such a compound is used as a copolymer component of the above-mentioned acrylic polymer, there can be preferably used a oxypropylene group-containing compound having a structure that lacks a radical polymerizable functional group (for instance, an acryloyl group or an methacryloyl group). In terms of low contamination, PPG is preferably used as the oxypropylene group-containing compound. Examples of particularly preferred oxypropylene group-containing compounds in the present invention include, for instance, PPG diols and triols.

The number-average molecular weight of the oxypropylene group-containing compound ranges from about $0.2 \times 10^3$ to $10 \times 10^3$ (more preferably, from about $0.2 \times 10^3$ to $5 \times 10^3$, typically from $1 \times 10^3$ to $5 \times 10^3$, for instance from about $2 \times 10^3$ to $5 \times 10^3$, and from about $3 \times 10^3$ to $5 \times 10^3$). Herein, the number-average molecular weight (Mn) denotes a value on a polystyrene basis obtained by gel permeation chromatography (GPC). If Mn is excessively lower than the above ranges, it may be difficult to sufficiently bring out the effect of reducing differences in peel strength that arise on account of the surface state of the adherend (for instance, the effect of bringing the value of the above-mentioned peel strength ratio close to 1). If Mn is excessively higher than the above ranges, compatibility between the acrylic polymer and the oxypropylene group-containing compound tends to be inadequate, which is likely to result in a drop of the level of anti-contamination to adherends.

The amount of oxypropylene group-containing compound used (blending amount) with respect to 100 parts by weight of the acrylic polymer can be, for instance, about 0.01 to 5 parts by weight, preferably, about 0.03 to 3 parts by weight, more preferably about 0.05 to 1 parts by weight. If the amount of oxypropylene group-containing compound that is used is excessively smaller than the above ranges, it becomes difficult to fully bring out the effect of reducing differences in peel strength that arise on account of the surface state of the adherend. If the amount of the oxypropylene group-containing compound used is excessively greater than the above ranges, the level of anti-contamination to adherends is likely to drop.

Next, an explanation is provided of the acrylic polymer serving as the base polymer (main component of the polymer components, or in other words, the component accounting for 50% by weight or more of all polymer components) of the PSA layer disclosed herein. Here, an "acrylic polymer" refers a polymer having for the main constituent monomer component thereof (monomer main component, or in other words, component that accounts for 50% by weight or more of the total amount of monomer that composes the acrylic polymer) a monomer having at least one (meth)acryloyl group in a molecule thereof (to also be referred to as an "acrylic monomer"). In particular, an acrylic polymer having an alkyl (meth)acrylate for the main constituent monomer component thereof is preferable.

In the present description, a "(meth)acryloyl group" collectively refers to an acryloyl group and a methacryloyl group. Similarly, a "(meth)acrylate" collectively refers to an acrylate and methacrylate.

As the alkyl (meth)acrylate there can be suitably used, for instance, compounds represented by formula (1) below.

$$CH_2=C(R^1)COOR^2 \qquad (1)$$

In formula (1), $R^1$ denotes a hydrogen atom or a methyl group, and $R^2$ denotes an alkyl group having 1 to 20 carbon atoms. Preferably, there is used an alkyl (meth)acrylate having 2 to 14 carbon atoms (hereafter, such a range may also be notated as $C_{2-14}$), since in that case there can be obtained a PSA having excellent PSA characteristics. Specific examples of $C_{2-14}$ alkyl groups include, for instance, methyl, ethyl, propyl, isopropyl, n-butyl, isobutyl, s-butyl, t-butyl, n-pentyl, isoamyl, neopentyl, n-hexyl, n-heptyl, n-octyl, isooctyl, 2-ethylhexyl, n-nonyl, isononyl, n-decyl, isodecyl, n-undecyl, n-dodecyl, n-tridecyl, n-tetradecyl and the like.

In a preferable aspect, one species or two or more species selected from alkyl (meth)acrylates in which $R^2$ in the formula 1 represents a $C_{2-14}$ alkyl group preferably account for roughly 50% by weight or more (typically 50 to 99.9% by weight), more preferably 70% by weight or more (typically 70 to 99.9% by weight), and for example, about 85% by weight or more (typically 85 to 99.9% by weight), of the total amount of alkyl (meth)acrylate used to synthesize the acrylic polymer. An acrylic polymer obtained from such a monomer composition is preferable in that it facilitates the formation of a PSA that exhibits favorable adhesiveness characteristics.

In a more preferable aspect, an alkyl (meth)acrylate in which $R^2$ in the formula 1 represents a $C_{6-14}$ alkyl group preferably accounts for roughly 50% by weight or more (typically 50 to 99.9% by weight), more preferably 70% by weight or more (typically 70 to 99.9% by weight), and for example, about 85% by weight or more (typically 85 to 99.9% by weight), of the total amount of alkyl (meth)acrylate used to synthesize the acrylic polymer. An acrylic polymer having such a monomer composition is preferable in that it facilitates the imparting of a PSA that is preferable for a surface protective film. For example, since peeling force from an adherend (peel strength on an adherend) is easily controlled to a low level, a PSA is easily obtained that has superior repeelability.

An acrylic polymer obtained by copolymerizing an acrylic monomer having a hydroxyl group (-OH) can be preferably used for the acrylic polymer in the techniques disclosed herein. Specific examples of acrylic monomers having a hydroxyl group include 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, 2-hydroxyheyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, polypropylene glycol mono(meth)acrylate, N-hydroxyethyl (meth)acrylamide and N-hydroxypropyl (meth)acrylamide. One species of these hydroxyl group-containing acrylic monomers may be used alone or two or more species may be used in combination. An acrylic polymer obtained by copolymerizing these monomers is preferable since it facilitates the imparting of a PSA preferable for a surface protective film. For example, since such a polymer is able to easily control peeling force to an adherend to a low level, a PSA having superior repeelability is easily obtained. Particularly preferable examples of hydroxyl group-containing acrylic monomers include (meth)acrylates containing a hydroxyl group such as 2-hydroxyethyl (meth)acrylate, 2-hydroxypropyl (meth)acrylate, 3-hydroxypropyl (meth)acrylate, 2-hydroxybutyl (meth)acrylate or 4-hydroxybutyl (meth)acrylate.

This hydroxyl group-containing acrylic monomer is preferably used within a range of roughly 0.1 to 15% by weight, more preferably within a range of roughly 0.2 to 10% by weight and particularly preferably within a range of roughly 0.3 to 8% by weight of the total amount of monomer used to synthesize the acrylic polymer. If the content of the hydroxyl group-containing acrylic monomer is excessively greater than the above ranges, the cohesive strength of the PSA becomes excessively large, fluidity (creep ability) decreases and wettability (adhesiveness) to the adherend tends to decrease. On the other hand, if the content of the hydroxyl group-containing acrylic monomer is excessively less than the above ranges, it may become difficult to adequately demonstrate the effect of using the monomer.

From the viewpoint of easily obtaining balance among adhesive performance, normally an acrylic polymer having a glass transition temperature (Tg) of roughly 0°C or lower (and typically, -100°C to 0°C) is used for the acrylic polymer in the techniques disclosed herein. An acrylic polymer having a Tg within the range of roughly -100°C to -5°C is preferable, while that having a Tg within the range of-80°C to -10°C is more preferable. If the value of Tg is excessively higher than the above ranges, initial adhesiveness during use in the vicinity of normal temperatures easily becomes inadequate, and workability of adhering a protective film may decrease. This value of Tg can be adjusted by suitably modifying the monomer composition of the acrylic polymer (namely, the types and ratios of the amounts used of the monomers used to synthesize the polymer).

Monomers other than those described above (other monomers) may also be copolymerized in the acrylic polymer in the techniques disclosed herein within a range that does not remarkably impair the effects of the present invention. Such monomers can be used for the purpose of, for example, adjusting Tg of the acrylic polymer or adjusting adhesive performance (such as peelability). For example, examples of monomers able to improve cohesive strength and heat resistance of a PSA include sulfonic acid group-containing monomers, phosphoric acid group-containing monomers, cyano group-containing monomers, vinyl esters and aromatic vinyl compounds. In addition, examples of monomers that can introduce a functional group into the acrylic polymer that can become a crosslinking site or contribute to improvement of adhesiveness include carboxyl group-containing monomers, acid anhydride group-containing monomers, amido group-containing monomers, amino group-containing monomers, imido group-containing monomers, epoxy group-containing monomers, (meth)acryloylmorpholine and vinyl ethers.

Examples of sulfonic acid group-containing monomers include styrene sulfonic acid, allyl sulfonic acid, 2-(meth)acrylamido-2- methylpropanesulfonic acid, (meth)acrylamidopropanesulfonic acid, sulfopropyl (meth)acrylate, (meth)acryloxynaphthalene sulfonic acid and sodium vinylsulfonate. Examples of phosphoric acid group-containing monomers include 2-hydroxyethyl acryloyl phosphate. Examples of cyano group-containing monomers include acrylonitrile and methacrylonitrile. Examples of vinyl esters include vinyl acetate, vinyl propionate and vinyl laurate. Examples of aromatic vinyl compounds include styrene, chlorostyrene, chloromethylstyrene, $\alpha$-methylstyrene and other substituted styrenes.

Examples of carboxyl group-containing monomers include (meth)acrylic acid, carboxyethyl (meth)acrylate, carboxypentyl (meth)acrylate, itaconic acid, maleic acid, fumaric acid, crotonic acid and isocrotonic acid. Examples of acid anhydride group-containing monomers include maleic anhydride, itaconic anhydride and acid anhydride forms of the previously listed carboxyl group-containing monomers. Examples of amido group-containing monomers include acrylamide, methacrylamide, diethylacrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropyl methacrylamide and diacetone acrylamide. Examples of amino group-containing monomers include aminoethyl (meth)acrylate, N,N-dimethylaminoethyl (meth)acrylate and N,N-dimethylaminopropyl (meth)acrylate. Examples of imido group-containing monomers include cyclohexylmaleimide, isopropylmaleimide, N-cyclohexylmaleimide and itaconimide. Examples of epoxy group-containing monomers include glycidyl (meth)acrylate, methylglycidyl (meth)acrylate and allyl glycidyl ether. Examples of vinyl ethers include methyl vinyl ether, ethyl vinyl ether and isobutyl vinyl ether.

Although one species of the "other monomers" may be used alone or two or more species may be used in combination, the total content thereof among the monomers used to synthesize the acrylic polymer is preferably roughly 40% by weight or less (and typically, 0.001 to 40% by weight), and more preferably roughly 30% by weight or less (and typically, 0.001 to 30% by weight). Alternatively, the acrylic polymer may have a composition that does not contain the other monomers (such as that obtained by using only $C_{6-14}$ alkyl (meth)acrylate as monomer, or that obtained by using only $C_{6-14}$ alkyl (meth)acrylate and hydroxyl group-containing (meth)acrylate).

In the case of using a monomer having a functional group such as a carboxyl group, sulfonic acid group or phosphoric acid group (such as an acrylic monomer having these acidic functional groups) for the other monomers described above, these monomers are preferably used such that the acid value of the acrylic polymer is at a limit of 29 or less (more preferably 16 or less, even more preferably 8 or less and particularly preferably 4 or less). As a result thereof, a phenomenon in which adhesiveness (and going even further, peeling force from an adherend) of a protective film adhered to an adherend increases over time can be suppressed and favorable repeelability can be maintained. The acid value of the acrylic polymer can be adjusted according the amount used of a monomer having an acidic functional group (namely, by adjusting the monomer composition). For example, in the case of an acrylic polymer obtained by using only 2-ethylhexylacrylate and acrylic acid as monomers, an acrylic polymer that satisfies an acid value of 29 or less can be obtained by making the amount of acrylic acid in a total of 100 parts by weight of these monomers 3.7 parts by weight or less.

The weight average molecular weight of the acrylic polymer in the techniques disclosed herein is preferably within the range of $10 \times 10^4$ to $500 \times 10^4$, more preferably within the range of $20 \times 10^4$ to $400 \times 10^4$, and even more preferably within the range of $30 \times 10^4$ to $300 \times 10^4$. Here, weight average molecular weight (Mw) refers to the value as polystyrene obtained by GPC. If the Mw is excessively below the above ranges, the cohesive strength of the PSA becomes inadequate, and PSA may easily remain on the surface of an adherend. On the other hand, if the Mw is excessively above the above ranges, the fluidity of the PSA decreases, and in a surface protective film provided with that PSA, it can be difficult to realize preferable values for compressive creep characteristics (indentation strain and/or strain recovery coefficient) as disclosed herein. When Mw is excessively larger than the above ranges, fluidity of the PSA decreases, and wettability (adhesiveness) onto the adherend may be likely to become deficient. Insufficient wettability may give rise to peeling off the adherend during use of the protective film adhered to the adherend (i.e. unintentional peeling at a stage where manifestation of the protective function of the protective film is still desired).

There are no particular limitations on the method used to obtain the acrylic polymer having this monomer composition, and the polymer can be obtained by applying various types of polymerization methods commonly used as techniques for synthesizing acrylic polymers, examples of which include solution polymerization, emulsion polymerization, bulk polymerization and suspension polymerization. In addition, the acrylic polymer may be a random copolymer, block copolymer or graft copolymer. A random copolymer is normally preferable from the viewpoints of productivity and the like.

The PSA composition disclosed herein may be in the form of a composition comprising an acrylic polymer in a liquid medium having water as a main component (for instance, an aqueous emulsion), a composition comprising an acrylic polymer in a liquid medium having an organic solvent as a main component (for instance, an organic solvent solution), or a composition (solventless) containing substantially no liquid medium that is not comprised in the PSA. This PSA composition is typically composed so as to allow the acrylic polymer to be suitably crosslinked. As a result of this crosslinking, a PSA layer can be formed that exhibits particularly preferable performance for use in a surface protective film. A method that can be preferably employed as specif crosslinking means consists of introducing crosslinking sites into an acrylic polymer by copolymerizing a monomer having a suitable functional group (such as a hydroxyl group or carboxyl group), adding to the acrylic polymer a compound able to form a crosslinked structure by reacting with that functional group (crosslinking agent), and allowing that compound to react to react with the acrylic polymer. Various materials used to crosslink typical acrylic polymers can be used as crosslinking agents, examples of which include isocyanate compounds, epoxy compounds, melamine resins and aziridine compounds One type of these crosslinking agents may be used alone or two or more types may be used in combination.

As the crosslinking agent used in the PSA composition for surface protective films there is preferably used, in particular, an isocyanate compound, since in that case peel strength from the adherend can be adjusted to lie within an appropriate range. Isocyanate compounds are particularly preferably used for the crosslinking agent (isocyanate-based crosslinking agent) used in the PSA composition since they facilitate the obtaining of a surface protective film that realizes preferable values for compressive creep characteristics (indentation strain and/or strain recovery coefficient) as disclosed herein and facilitate adjustment of those compressive creep characteristics. The use of an isocyanate compound is also preferable with respect to facilitating adjustment of peeling force from an adherend to a suitable range. Examples of these isocyanate compounds include aromatic isocyanates such as tolylene diisocyanate or xylylene diisocyanate; alicyclic isocyanates such as isophorone diisocyanate; and aliphatic isocyanates such as hexamethylene diisocyanate. More specific examples include lower aliphatic polyisocyanates such as butylene diisocyanate or hexamethylene diisocyanate; alicyclic isocyanates such as cyclopentylene diisocyanate, cyclohexylene diisocyanate or isophorone diisocyanate; aromatic diisocyanates such as 2,4-tolylene diisocyanate, 4,4'-diphenylmethane diisocyanate or xylylene diisocyanate; and isocyanate addition products such as trimethylolpropane/tolylene diisocyanate trimer addition product (Nippon Polyurethane Industry Co., Ltd., trade name: "Coronate L"), trimethylolpropane/hexamethylene diisocyanate trimer addition product (Nippon Polyurethane Industry Co., Ltd., trade name: "Coronate HL") or an isocyanurate form of hexamethylene diisocyanate (Nippon Polyurethane Industry Co., Ltd., trade name: "Coronate HX"). One species of these isocyanate compounds may be used alone or two or more species may be used in combination.

Examples of epoxy compounds used as crosslinking agents include N,N,N',N'-tetraglycidyl-m-xylene diamine (Mitsubishi Gas Chemical Co., Inc., trade name: "Tetrad-X") and 1,3-bis(N,N-diglycidylaminomethyl) cyclohexane (Mitsubishi Gas Chemical Co., Inc., trade name: "Tetrad-C"). Examples of melamine resins include hexamethylol melamine. Examples of aziridine derivatives include commercially available products such as "HDU", "TAZM" or "TAZO" (trade names) manufactured by Sogo Pharmaceutical Co., Ltd.

The amount of the crosslinking agent used can be suitably selected corresponding to the composition and structure (such as molecular weight) of the acrylic polymer, mode of use of the surface protective film and the like. Normally, the amount of the crosslinking agent used based on 100 parts by weight of the acrylic polymer is suitably roughly 0.01 to 15 parts by weight, and preferably roughly 0.1 to 10 parts by weight (for example, roughly 0.2 to 2 parts by weight). If the amount of the crosslinking agent used is excessively low, the cohesive strength of the PSA becomes inadequate and PSA may easily remain on the surface of an adherend. On the other hand, if the amount of the crosslinking agent used is excessively high, the cohesive strength of the PSA becomes excessively large, fluidity decreases and it may be difficult to realize preferable values for compressive creep characteristics (indentation strain and/or strain recovery coefficient) as disclosed herein. If the amount of crosslinking agent that is used is too large, the cohesive strength of the PSA becomes excessively high and fluidity decreases. Deficient wettability onto the adherend may give rise to peeling.

Another example of crosslinking means consists of incorporating a polyfunctional monomer having two or more radiation-reactive functional groups in a molecule thereof, and irradiating the polyfunctional monomer with radiation to crosslink (cure) the acrylic polymer. Examples of radiation-reactive functional groups include unsaturated groups such as vinyl groups, acryloyl groups, methacryloyl groups or vinylbenzyl groups. Normally, a polyfunctional monomer in which the number of radiation-reactive functional groups per molecule is 10 or less (for example, 2 to 6) is used preferably. One species of these polyfunctional monomers may be used alone or two or more species may be used in combination.

Specific examples of polyfunctional monomers include ethylene glycol di(meth)acrylate, diethylene glycol di (meth)acrylate, tetraethylene glycol di(meth)acrylate, neopentylglycol di(meth)acrylate, 1,6-hexanediol di(meth)acrylate, trimethylolpropane tri(meth)acrylate, pentaerythritol tri(meth)acrylate, dipentaerythritol hexa(meth)acrylate, divinylbenzene and N,N'-methylenebisacrylamide.

The amount of the polyfunctional monomer used can be suitably selected corresponding to the composition and structure (such as molecular weight) of the acrylic polymer, the mode of use of the surface protective film and the like. Normally, 0.1 to 30 parts by weight of polyfunctional monomer are suitably incorporated based on 100 parts by weight of the acrylic polymer. In applications that emphasize greater flexibility and adhesiveness, the incorporated amount of the polyfunctional monomer based on 100 parts by weight of the acrylic polymer may be 10 parts by weight or less (for example, 0.1 to 10 parts by weight).

Examples of radiation that can be used in crosslinking reactions include ultraviolet rays, laser rays, $\alpha$-rays, $\beta$-rays, $\gamma$-rays, X-rays and electron beam. Normally ultraviolet rays (for example, ultraviolet rays having a wavelength of about 200 to 400 nm) are used preferably from the viewpoints of favorable controllability and handling ease as well as in terms of cost. A suitable light source such as a high-pressure mercury lamp, microwave-excited discharge lamp or chemical lamp can be used to radiate the radiation.

In the case of using ultraviolet rays for the radiation, normally a photopolymerization initiator is preferably added to the PSA composition. A substance that generates radicals (photoradical polymerization initiator) or substance that generates cations (photocation polymerization initiator) by irradiating with ultraviolet rays of a suitable wavelength capable of triggering the polymerization reaction can be used for the photopolymerization initiator corresponding to the type of radiation-reactive functional group contained in the PSA composition.

Examples of photoradical polymerization initiators include benzoins such as benzoin, benzoin methyl ether, benzoin ethyl ether, o-benzoyl benzoic acid methyl-p-benzoin ethyl ether, benzoin isopropyl ether or $\alpha$-methylbenzoin; acetophenones such as benzyldimethylketal, trichloroacetophenone, 2,2-diethoxyacetophenone or 1-hydroxycyclohexyl phenyl ketone; propiophenones such as 2-hydroxy-2-methylpropiophenone or 2-hydroxy-4'-isopropyl-2-methylpropionphenone; benzophenones such as benzophenone, methylbenzophenone, p-chlorobenzophenone or p-dimethylaminobenzophenone; thioxanthones such as 2-chlorothioxanthone, 2-ethylthioxanthone or 2-isopropylthioxanthone; acylphosphine oxides such as bis(2,4,6-trimethylbenzoyl)-phenylphosphine oxide, 2,4,6-trimethylbenzoyldiphenylphosphine oxide or 2,4,6-trimethylbenz,oylethoxyphenylphosphine oxide; as well as benzyl, dibenzosuberone and $\alpha$-acyloxime ester.

Examples of photocation polymerization initiators include onium salts such as aromatic diazonium salts, aromatic iodinium salts or aromatic sulfonium salts; organometallic complexes such as iron-allene complex, titanocene complex or allylsilanol-aluminum complex; as well as nitrobenzyl esters, sulfonic acid derivatives, phosphate esters, phenolsulfonate esters, diazonaphthoquinone and N-hydroxyimidosulfonate.

One species of these photopolymerization initiators may be used alone or two or more species may be used in combination. The amount of photopolymerization initiator used can be, for example, roughly 0.1 to 10 parts by weight based on 100 parts by weight of the acrylic polymer. Normally, roughly 0.2 to 7 parts by weight of photopolymerization initiator are preferably incorporated for 100 parts by weight of the acrylic polymer.

Photo-initiated polymerization assistant such as amines can also be used in combination. Examples of these photo-initiated polymerization assistants include 2-dimethylaminoethylbenzoate, dimethylaminoacetophenone, p-dimethylaminobenzoate ethyl ester and p-dimethylaminobenzoate isoamyl ester. One species of these photo-initiated polymerization assistants may be used alone or two or more species may be used in combination. The amount of the photo-initiated polymerization assistant used is preferably roughly 0.05 to 10 parts by weight (for example, roughly 0.1 to 7 parts by weight) based on 100 parts by weight of the acrylic polymer.

A crosslinking catalyst for more effectively promoting any of the crosslinking reactions disclosed herein can also be contained in the PSA composition. A tin-based catalyst (such as dibutyltin dilaurate in particular) can be preferably used for the crosslinking catalyst. Although there are no particular limitations on the amount of the crosslinking catalyst (for example, a tin-based catalyst such as dibutyltin dilaurate) used, the amount used can be made to be, for example, roughly 0.005 to 1 part by weight based on 100 parts by weight of the acrylic polymer.

The PSA composition disclosed herein may contain a compound that exhibits keto-enol tautomerism. For instance, there can be preferably used a form of the PSA composition comprising a crosslinking agent, or a PSA composition that can be used with a crosslinking agent blended thereinto, such that the PSA composition comprises the above-mentioned compound that exhibits keto-enol tautomerism. This feature allows suppressing excessive viscosity increases or gelling of the PSA composition after blending of the crosslinking agent thereinto. Incorporating a compound that exhibits keto-enol tautomerism is particularly meaningful in a case where at least an isocyanate compound is used as the crosslinking agent. The above feature can be preferably used in cases where, for instance, the PSA composition is in the form of an organic solvent solution or is solventless.

Various $\beta$-dicarbonyl compounds can be used as the compound that exhibits keto-enol tautomerism. Specific examples thereof include, for instance, $\beta$-diketones such as acetylacetone, 2,4-hexanedione, 3,5-heptanedione, 2-methylhexane-3,5-dione, 6-methylheptane-2,4-dione, 2,6-dimethylheptane-3,5-dione; acetoacetate esters such as methyl acetoacetate, ethyl acetoacetate, isopropyl acetoacetate, tert-butyl acetoacetate or the like; propionyl acetate esters such as ethyl propionyl acetate, ethyl propionyl acetate, isopropyl propionyl acetate, tert-butyl propionyl acetate and the like; isobutyryl acetates such as ethyl isobutyryl acetate, ethyl isobutyryl acetate, isopropyl isobutyryl acetate, tert-butyl isobutyryl acetate or the like; and malonic acid esters such as methyl malonate, ethyl malonate or the like. Preferred compounds among the foregoing are acetylacetone and acetoacetate esters. The compound that exhibits keto-enol tautomerism may be used singly or in combinations of two or more types.

The amount used of compound that exhibits keto-enol tautomerism can be set to, for instance, about 0.1 to 20 parts by weight with respect to 100 parts by weight of acrylic polymer. Ordinarily, it is appropriate to set the amount to about 0.5 to 15 parts by weight (for instance, about 1 to 10 parts by weight). The effect elicited by using the compound may be difficult to elicit if the amount of the compound is too small. On the other hand, production costs are likely to increase when using the compound beyond a required amount.

Moreover, the PSA composition disclosed herein can be blended with various types of conventionally known additives as necessary. Examples of these additives include surface lubricants, leveling agents, antioxidants, preservatives, photostabilizers, ultraviolet absorbers, polymerization inhibitors, silane coupling agents and inorganic or organic fillers. In addition, a known and/or commonly used tackifier resin may also be incorporated in a PSA composition having an acrylic polymer as a base polymer thereof. In the technology disclosed herein, the PSA composition is preferably in a form that contains no ionic liquid salt. This allows providing a surface protective film that boasts small differences in peel strength on account of the surface state of an adherend and that is excellent in anti-contamination to adherends. However, an ionic liquid salt may be used so long as the effect of the present invention is not significantly impaired thereby.

The surface protective film disclosed herein (for instance, a surface protective film that protects the surface of an optical component such as a polarizing plate or wave plate during processing or transport of that optical component, and typically a surface protective film used in an optical component that is employed as a constituent element of a liquid crystal display) is characterized by having a PSA layer formed out of any of the PSA compositions disclosed herein on one or both sides (typically on one side) of a support. The surface protective film provided by the present invention can be in forms referred to as a PSA sheet, PSA tape, PSA label, PSA film and the like. The PSA layer is typically formed continuously, but is not limited thereto, and may be a PSA layer formed in a regular or random pattern such as dots or stripes. The surface protective film provided by the present invention may be in the form of rolls or sheets.

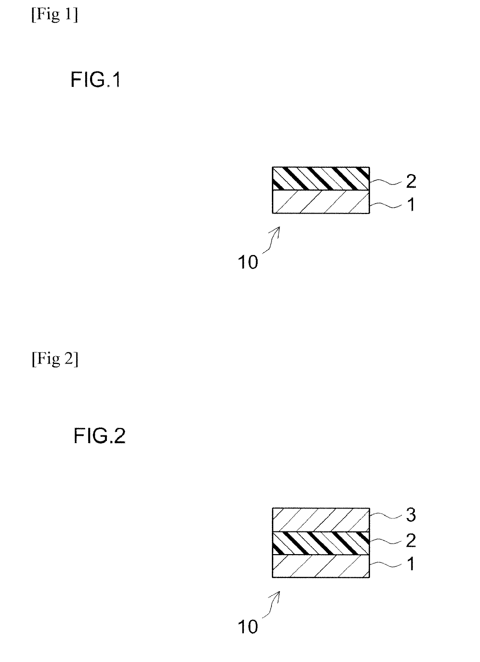

Fig. 1 illustrates schematically a typical configuration example of the surface protective film provided by the present invention. The surface protective film 10 comprises a sheet-shaped support 1 and a PSA layer 2 provided on a first side (one side) of the support 1. The PSA layer 2 is used for adhesion to an adherend (element to be protected, for instance the surface of an optical component such as a polarizing plate). The protective film 10 prior to being used (i.e. before adhesion to an adherend) can typically be in a form wherein the surface (side adhered to the adherend) of the PSA layer 2 is protected by a release liner 3 such that at least the face of the release liner 3 on the side of the PSA layer 2 constitutes a release side, as illustrated in Fig. 2. Alternatively, the surface protective film 10 may also be of a form in which the other side of the support 1 (back side of the side on which the PSA layer 2 is provided) serves as the peeled side, and the PSA layer 2 contacts the other side enabling the surface thereof to be protected by winding the protective film 10 into the shape of a roll.

The support that composes the surface protective film disclosed herein can be various types of synthetic resin film (plastic film), paper, non-woven fabric and the like. From the viewpoint of having a superior surface protective function, normally a synthetic resin film is preferably used for the support. There are no particular limitations on the material (resin material) that composes the synthetic resin film provided it can be formed into the form of a sheet or film. Examples include polyolefin films such as those composed of polyethylene, polypropylene, poly-1-butene, poly-4-methyl-1-pentene, ethylene-propylene copolymer, ethylene-1-butene copolymer, ethylene-vinyl acetate copolymer, ethylene-ethyl acrylate copolymer or ethylene-vinyl alcohol copolymer; polyester films such as those composed of polyethylene terephthalate, polyethylene naphthalate or polybutylene terephthalate; polyamide films such as those composed of Nylon 6, Nylon 6,6 or partially aromatic polyamides; as well as synthetic resin films composed of resin materials such as polyacrylate films, polystyrene films, polyvinyl chloride films, polyvinylidene chloride films or polycarbonate films (which may have a monolayer structure or laminated structure comprising two or more layers of different materials). Although the thickness of the support can be suitably selected corresponding to the purpose of use, it is normally about 5 μm to 200 μm and preferably about 10 μm to 100 μm.

Various types of additives such as fillers (such as inorganic fillers or organic fillers), aging preventive agents, antioxidants, ultraviolet absorbers, lubricants, plasticizers or colorants (such as pigments or dyes) may be incorporated in the synthetic resin film as necessary. A commonly known or commonly used surface treatment such as acid treatment, alkaline treatment, corona discharge treatment, plasma treatment, ultraviolet radiation treatment or coating of an undercoating agent may be carried out on the surface of the support (surface on the side on which the PSA layer is provided). This surface treatment can be treatment that, for example, enhances adhesiveness between the PSA layer and the support (anchoring property of the PSA layer). In addition, mold release or soiling prevention treatment may also be carried out on the support as necessary using a conventionally known mold release agent (such as a silicone-based, fluorine-based, long chain alkyl-based or fatty acid amide-based agent).

A support formed of a synthetic resin film subjected to antistatic treatment can be preferably employed for the support of the surface protective film disclosed herein. There are no particular limitations on the method used to carry out antistatic treatment, and examples of methods that can be used include a method in which an antistatic layer is provided on at least one side of the film, and a method in which an antistatic agent is mixed into the film.

Examples of methods of providing an antistatic layer on at least one side of the film include a method consisting of coating an antistatic agent and, as necessary, an antistatic coating agent containing the resin component used, a method consisting of coating an electroconductive polymer and, as necessary, an electroconductive coating agent containing another resin component used, and a method consisting of vapor-depositing or plating an electroconductive substance.

Examples of antistatic agents (antistatic components) contained in the antistatic coating agent include cationic antistatic agents having a cationic functional group such as a quaternary ammonium salt, pyridinium salt or primary, secondary or tertiary amine group; anionic antistatic agents having an anionic functional group such as a sulfonate ester, sulfate ester, phosphonate ester or phosphate ester; amphoteric antistatic agents such as alkyl betaines and derivatives thereof, imidazoline and derivatives thereof or analine and derivatives thereof; nonionic antistatic agents such as amino alcohols and derivatives thereof, glycerin and derivatives thereof or polyethylene glycol and derivatives thereof; and ionic electroconductive polymers obtained by polymerizing or copolymerizing a monomer having a cationic, anionic or amphoteric ionic electroconductive group. One type of these antistatic agents may be used alone or two or more types may be used in combination.

Specific examples of cationic antistatic agents include acrylic copolymers having a quaternary ammonium group such as alkyl trimethyl ammonium salt, acryloylamide propyl trimethyl ammonium methosulfate, alkylbenzyl methyl ammonium salt, acylcholine chloride or poly(dimethyl aminoethyl methacrylate); styrene copolymers having a quaternary ammonium group such as poly(vinyl benzyltrimethyl ammonium chloride); and diallylamine copolymers having a quaternary ammonium group such as poly(diallyldimethyl ammonium chloride). Specific examples of anionic antistatic agents include alkyl sulfonates, alkylbenzene sulfonates, alkyl sulfate esters, alkylethoxy sulfate esters, alkyl phosphate esters and sulfonic acid group-containing styrene copolymers. Specific examples of amphoteric antistatic agents include alkyl betaines, alkyl imidazolium betaines and carbobetaine graft copolymers.

Specific examples of nonionic antistatic agents include fatty acid alkyloylamides, di(2-hydroxyethyl)alkylamines, polyoxyethylene alkylamines, fatty acid glycerin esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycol, polyoxyethylene diamines, copolymers consisting of polyether, polyester and polyamide, and methoxy polyethylene glycol (meth)acrylate.

Examples of electroconductive polymers include polyaniline, polypyrrole and polythiophene. One type of these electroconductive polymers may be used alone or two or more types may be used in combination.

Examples of electroconductive substances include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide and alloys or mixtures thereof. One type of these electroconductive substances may be used alone or two or more types may be used in combination.

A general-purpose resin such as polyester resin, acrylic resin, polyvinyl resin, urethane resin, melamine resin or epoxy resin is used for the resin component used in the antistatic coating agent or electroconductive coating agent. In the case of a polymeric antistatic agent, the use of a resin component can be omitted. A methylolated or alkylolated melamine-based, urea-based, glyoxal-based or acrylamide-based compound, epoxy compound or isocyanate compound and the like may be contained in the antistatic coating agent.

The antistatic coating agent or electroconductive coating agent can be in the form of a liquid composition in which an antistatic component (the antistatic agent or electroconductive polymer as previously described) and, as necessary, the resin component used are dispersed or dissolved in a suitable solvent (organic solvent, water or mixed solvent thereof). A method consisting of coating the liquid composition onto a synthetic resin film followed by drying can be preferably employed for the method used to form an antistatic layer. Examples of organic solvents that compose the liquid composition include methyl ethyl ketone, acetone, ethyl acetate, tetrahydrofuran (THF), dioxane, cyclohexanone, n-hexane, toluene, xylene, methanol, ethanol, n-propanol and isopropanol. One species of these solvents may be used alone or two or more species may be used as a mixture.

A commonly known coating method can be suitably used for the method used to coat the liquid composition for forming the antistatic layer. Specific examples of coating methods include roll coating, gravure coating, reverse coating, roll brush coating, spray coating, air knife coating, impregnation coating and curtain coating. The thickness of the antistatic layer is normally roughly 0.01 $\mu$m to 5 $\mu$m, preferably roughly 0.005 $\mu$m to 3 $\mu$m, and more preferably roughly 0.03 $\mu$m to 1 $\mu$m.

In the case of providing an antistatic layer by vapor-depositing or plating an electroconductive substance, a conventionally known method such as vacuum deposition, sputtering, ion plating, chemical vapor deposition, spray pyrolysis deposition, chemical plating or electroplating can be suitably employed for the vapor deposition or plating method. The thickness of the electroconductive substance layer formed by these methods is normally roughly 20 Å to 10000 Å and preferably roughly 50 Å to 5000 Å.

During antistatic treatment using a method consisting of mixing an antistatic agent into a film, an antistatic agent similar to the materials listed as examples of antistatic agents used to form the antistatic layer can be employed for the antistatic agent used (antistatic agent for mixing). The incorporated amount of these antistatic agents can be, for example, roughly 20% by weight or less (and typically, 0.05 to 20% by weight) based on the total weight of the film, and normally is suitably within the range of 0.05 to 10% by weight. There are no particular limitations on the method used to mix the antistatic agent provided it is a method that allows the antistatic agent to be uniformly mixed in the synthetic resin material for forming the film, and examples of mixing methods include those using heated rollers, Banbury mixer, pressurized kneader or biaxial kneader.

The PSA layer that composes the surface protective film disclosed herein can be preferably formed by applying a PSA composition as previously described to a prescribed surface followed by drying or curing. Examples of methods that can be employed include a method consisting of directly applying the PSA composition to a support followed by drying or curing to form a PSA layer on the support (direct method); and a method consisting of applying the PSA composition to the surface of a release liner (release surface) followed by drying or curing to form a PSA layer on the surface thereof, and then laminating the PSA layer to a support to transfer the PSA layer to the support (transfer method). From the viewpoint of the anchoring property of the PSA layer, the direct method can normally be preferably employed. When applying (and typically, coating) the PSA composition, various types of methods conventionally known in the field of PSA sheets can be suitably employed, examples of which include coating methods such as roll coating, gravure coating, reverse coating, roll brush coating, spray coating, air knife coating or die coating. There are no particular limitations on the thickness of PSA layer, but the thickness can be, for example, roughly 3 $\mu$m to 100 $\mu$m, and normally is preferably roughly 5 $\mu$m to 50 $\mu$m.

The surface protective film disclosed herein can be provided in a form in which a release liner is laminated to a PSA surface (in the form of a surface protective film with release liner) for the purpose of protecting the PSA surface (surface of the PSA layer on the side adhered to an adherend). Paper or a synthetic resin film and the like can be used for the substrate that composes the release liner, and a synthetic resin film is used preferably from the viewpoint of superior surface smoothness. For example, a synthetic resin film composed of a resin material similar to that of the support can be preferably used for the substrate of the release liner. The thickness of the release liner can be, for example, roughly 5 $\mu$m to 200 $\mu$m, and normally is preferably roughly 10 $\mu$m to 100 $\mu$m. The side of the release liner that is adhered to the PSA layer may be subjected mold release or soiling prevention treatment using a conventionally known mold release agent (such as a silicone-based, fluorine-based, long chain alkyl-based or fatty acid amide-based agent) or silica powder and the like.

Several experimental examples of the invention are described below, although these specific examples are not intended to limit the scope of the invention. In the description that follows, unless noted otherwise, all references to "parts" and "%" are based on weight. Each of the characteristics described in the following explanation were respectively measured as indicated below.

[Measurement of Acid Value]

Acid value was measured using an automatic titrator (COM-550, Hiranuma Sangyo Corp.), and determined according to the following equation.

$$A = \{(Y\text{-}X) \times f \times 5.611\}/M$$

A: Acid value
Y: Amount of titrating solution required to titrate sample solution (mL)
X: Amount of titrating solution required to titrate 50 g of mixed solvent (mL)
f: Titrating solution factor
M: Weight of polymer sample (g)

Measurement conditions were as indicated below.

Sample solution: The sample solution was prepared by dissolving about 0.5 g of polymer sample in 50 g of mixed solvent (obtained by mixing toluene, 2-propanol and distilled water at a weight ration of 50/49.5/0.5).
Titrating solution: 0.1 N 2-propanolic potassium hydroxide solution (Wako Pure Chemical Industries, Ltd., for use in petroleum product neutralization number testing) Electrode:
Glass electrode, GE-101
Reference electrode, RE-201
Measurement mode: Petroleum product neutralization number test 1

[Measurement of Molecular Weight]

Molecular weight was measured using a GPC apparatus (Tosoh Corp., HLC-8220GPC). Measurement conditions were as indicated below. Molecular weight was determined based on polystyrene.
Sample concentration: 0.2% by weight (THF solution)
Sample injection volume: 10 μL
Eluant: THF
Flow rate: 0.6 mL/min
Measuring temperature: 40°C Columns:
Sample columns: TSKguard Column Super HZ-H (1 column) + TSKgel Super HZM-H (2 columns)
Reference column: TSKgel Super H-RC (1 column)
Detector: Differential refractometer (RI)

[Measurement of Glass Transition Temperature]

Glass transition temperature (Tg) (°C) was determined according to the following method using a dynamic mechanical analyzer (Rheometrics Inc., ARES). Namely, acrylic polymer sheets (thickness: 20 μm) were laminated to a thickness of about 2 mm and stamped out in a shape having a diameter of Ø 7.9 mm to prepare a cylindrical pellet. This pellet was used as the sample for measurement of glass transition temperature. The measurement sample was immobilized in a jig (0 7.9 mm parallel plates), temperature dependency of loss elastic modulus G" using the dynamic mechanical analyzer, and defining the temperature where the resulting G" curve reaches a maximum to be the glass transition temperature (°C). The measurement conditions were as indicated below.

Measurement mode: Shear mode

Temperature range: -70 to 150°C
Heating rate: 5°C/min
Frequency: 1 Hz

[Pot life evaluation]

PSA compositions according to the respective examples were prepared, and were left to stand in an environment at normal temperature (25°C), for 48 hours. Thereafter, the compositions were observed visually to assess whether the compositions were in a gelled state or not. The viscosity of compositions that had not gelled was measured at 25°C and 20 rpm using a rotational viscometer (B-viscometer, by TOKIMEC).

Example 1

200 parts of 2-ethylhexyl acrylate, 8 parts of 2-hydroxyethyl acrylate, 0.4 parts of 2,2'-azobisisobutyronitrile as polymerization initiator and 312 parts of ethyl acetate were placed in a four-mouth flask equipped with a stirring blade, thermometer, nitrogen gas feed tube and dropping funnel followed by introducing nitrogen gas while stirring gently, holding the temperature of the liquid in the flask to the vicinity of 60°C and carrying out a polymerization reaction for 5 hours to prepare an acrylic polymer A solution (solid convent (NV): 40%). The weight average molecular weight (Mw) of this acrylic polymer A was $55 \times 10^4$, the glass transition temperature (Tg) was -55°C, and the acid value was 0.0.
A solution (NV: 40%) of the above acrylic polymer A was diluted, through addition of ethyl acetate, to NV: 20%. To 100 parts of this solution there were added 0.06 parts of polypropylene glycol diol (PPG) (by Wako Pure Chemical Industries) having a number-average molecular weight (Mn) of 2000, 0.8 parts of a isocyanurate of hexamethylenediisocyanate (Coronate HX by Nippon Polyurethane Industry) as a crosslinking agent, and 0.4 parts of dibutyltin dilaurate (1 % ethyl acetate solution) as a crosslinking catalyst, with mixing and stirring for about 1 minute at normal temperature (25°C), to prepare a PSA composition B1.
On the other hand, 10 parts of antistatic agent (Solvex Co., Ltd., Microsolver RMd-142, composed mainly of tin oxide and polyester resin) were diluted with a mixed solvent of water and methanol mixed at a ratio 30/70 (weight ratio) to prepare an antistatic agent solution. This antistatic solution was coated onto one side of a polyethylene terephthalate (PET) film having a thickness of 38 μm using a Mayer bar followed by heating for 1 minute at 130°C to remove the solvent and form an antistatic layer having a thickness of 0.2 μm. An antistatic-treated PET film was produced in this manner.
The PSA composition B1 was coated onto the side of the antistatic-treated film opposite from the antistatic-treated side followed by heating for 3 minutes at 110°C to form a PSA layer having a thickness of 20 μm. Next, a silicone-

treated side (release side) of a PET film (release liner) having a thickness of 25 μm and subjected to silicone treatment on one side thereof was laminated to the surface of the PSA layer. In this manner, a PSA sheet C1 was obtained having the PSA layer on one side of the antistatic-treated film (support) in a form in which the PSA layer was protected by the release liner.

In the preparation of the above PSA composition B1, there was further added 1 part (5 parts with respect to 100 parts of the acrylic polymer) of acetylacetone as a compound that elicits keto-enol tautomerism. Otherwise, a PSA composition B1a was prepared in the same way as in B1. The viscosity (25°C, 20 rpm) of this composition B1a immediately after preparation was 0. 1 Pa-s. The pot life of the compositions B1, B1a was evaluated in accordance with the above-described method. Thereupon, B 1 gelled, and B1a exhibited a viscosity of 0.1 Pa·s.

Example 2

A solution (NV: 40%) of the above acrylic polymer A was diluted, through addition of ethyl acetate, to NV: 20%. To 100 parts of this solution there were added 0.1 parts of PPG diol (by Wako Pure Chemical Industries) having Mn 3000, 0.8 parts of a trimethylolpropane/tolylene diisocyanate trimer adduct (by Nippon Polyurethane Industry, "Coronate L", 75% ethyl acetate solution) as a crosslinking agent, 0.4 parts of dibutyltin dilaurate (1% ethyl acetate solution) as a crosslinking catalyst, with mixing and stirring for about 1 minute at normal temperature (25°C), to prepare a PSA composition B2. A PSA sheet C2 was produced in the same way as in Example 1, with the exception of using B2 instead of the PSA composition B1.
A PSA composition B2a was prepared in the same way as in composition B2, with the exception of further adding 1 part of acetylacetone (viscosity immediately after preparation: 0.1 Pa·s). The pot life of the compositions B2, B2a was evaluated in accordance with the above-described method. Thereupon, B2 gelled, and B2a exhibited a viscosity of 0.1 Pa·s.

Example 3

Herein, 0.2 parts of PPG triol (by Wako Pure Chemical Industries) having Mn 700 were used instead of the PPG used in Example 1. Otherwise, a PSA composition B3 was prepared in the same way as in Example 1. A PSA sheet C3 was produced in the same way as in Example 1, with the exception of using B3 instead of the PSA composition B1. A PSA composition B3a was prepared in the same way as in composition B3, with the exception of further adding 1 part of acetylacetone (viscosity immediately after preparation: 0.1 Pa·s). Upon pot life evaluation, B3 gelled, and B3a exhibited a viscosity of 0.1 Pa·s.

Example 4

Herein, 0.01 parts of the same PPG as used in Example 2 were employed herein instead of the PPG used in Example 1. Otherwise, a PSA composition B4 was prepared in the same way as in Example 1. A PSA sheet C4 was produced in the same way as in Example 1, with the exception of using B4 instead of the PSA composition B1.
A PSA composition B4a was prepared in the same way as in composition B4, with the exception of further adding 1 part of acetylacetone (viscosity immediately after preparation: 0.1 Pa·s). Upon pot life evaluation, B4 gelled, and B4a exhibited a viscosity of 0.1 Pa·s.

Example 5

Herein, 0.02 parts of a PPG-polyethylene glycol-PPG block copolymer (diol type, Mn 2000, by Sigma Aldrich) were used instead of the PPG used in Example 1. Otherwise, a PSA composition B5 was prepared in the same way as in Example 1. A PSA sheet C5 was produced in the same way as in Example 1, with the exception of using B5 instead of the PSA composition B1.
A PSA composition B5a was prepared in the same way as in composition B5, with the exception of further adding 1 part of acetylacetone (viscosity immediately after preparation: 0.1 Pa·s). Upon pot life evaluation, B5 gelled, and B5a exhibited a viscosity of 0.1 Pa·s.

Example 6

Herein, 0.1 parts of PPG diol (by Wako Pure Chemical Industries) having Mn 4000 were used instead of the PPG used in Example 1. As the crosslinking agent, there was used 1.1 parts of a trimethylolpropane/ tolylene diisocyanate trimer adduct (by Nippon Polyurethane Industry, "Coronate L", 75% ethyl acetate solution). Otherwise, a PSA composition B6a was prepared in the same way as in the PSA composition B1a. A PSA sheet C6a was produced in the same way as in Example 1, with the exception of using B6a instead of the PSA composition B1. The viscosity of the composition B6a immediately after preparation was 0.1 Pa·s. The viscosity in the pot life evaluation (i.e. viscosity 48 hours after preparation) was likewise 0.1 Pa·s.

Example 7

Herein, 0.1 parts of PPG triol (by Wako Pure Chemical Industries) having Mn 3000 were used instead of the PPG used in Example 6. Otherwise, a PSA composition B7a was prepared in the same way as in Example 6. A PSA sheet C7a was produced in the same way as in Example 1, with the exception of using B7a instead of the PSA composition B1. The viscosity of the composition B7a immediately after preparation was 0.1 Pa·s. The viscosity in a pot life evaluation was also 0.1 Pa·s.

Example 8

Herein, 0.1 parts of PPG triol (by Wako Pure Chemical Industries) having Mn 4000 were used instead of the PPG used in Example 6. Otherwise, a PSA composition B8a was prepared in the same way as in Example 6. A PSA sheet C8a was produced in the same way as in Example 1, with the exception of using B8a instead of the PSA composition B1. The viscosity of the composition B8a immediately after preparation was 0.1 Pa·s. The viscosity in a pot life evaluation was also 0.1 Pa·s.

Example 9

Herein, 0.1 parts of PPG triol (by Sigma Aldrich) having Mn 5000 were used instead of the PPG used in Example 6. Otherwise, a PSA composition B9a was prepared in the same way as in Example 6. A PSA sheet C9a was produced in the same way as in Example 1, with the exception of using B9a instead of the PSA composition B1. The viscosity of the composition B9a immediately after preparation was 0.1 Pa·s. The viscosity in a pot life evaluation was also 0.1 Pays.

Example 10

Herein, 0.1 parts of an end-acetylated PPG triol (Sanyo Chemical Industries) having Mn 3000 were used instead of the PPG used in Example 6. Otherwise, a PSA composition B10a was prepared in the same way as Example 6. A PSA sheet C10a was produced in the same way as in Example 1 , with the exception of using B 10a instead of the PSA composition B1. The viscosity of the composition B10a immediately after preparation was 0.1 Pa·s. The viscosity in a pot life evaluation was also 0.1 Pa·s.

Example 11

Herein, B9a was used in Example 1 instead of the PSA composition B1, and the thickness of the PSA layer was changed to 10 μm. Otherwise, a PSA sheet C11a was produced in the same way as in Example 1.

Example 12

A PSA composition B12 was produced in the same way as in Example 1, but herein no PPG was used. A PSA sheet C12 was produced in the same way as in Example 1, with the exception of using B12 instead of the PSA composition B1.
A PSA composition B12a was prepared in the same way as in composition B12, with the exception of further adding 1 part ofacetylacetone (viscosity immediately after preparation: 0.1 Pa·s). Upon pot life evaluation, B12 gelled, and B12a exhibited a viscosity of 0.1 Pa·s.

Example 13

A PSA composition B13 was produced in the same way as in Example 2, but herein no PPG was used. A PSA sheet C13 was produced in the same way as in Example 1, with the exception of using B 13 instead of the PSA composition B1.
A PSA composition B13a was prepared in the same way as in composition B13, with the exception of herein further adding 1 part of acetylacetone (viscosity immediately after preparation: 0.1 Pa·s). Upon pot life evaluation, B13 gelled, and B13a exhibited a viscosity of 0.1 Pa·s.

Example 14

Herein, 0.2 parts of polyethylene glycol diol (by Wako Pure Chemical Industries) having Mn 600 were used instead of the PPG used in Example 1. Otherwise, a PSA composition B14 was prepared in the same way as in Example 1. A PSA sheet C14 was produced in the same way as in Example 1, with the exception of using B 14 instead of the PSA composition B1.
A PSA composition B14a was prepared in the same way as in composition B4, with the exception of further adding 1 part of acetylacetone (viscosity immediately after preparation: 0.1 Pa·s). Upon pot life evaluation, B14 gelled, and B14a exhibited a viscosity of 0.1 Pa·s.

Example 15

Herein, 0.001 parts of the same PPG as used in Example 2 were employed instead of the PPG used in Example 1. Otherwise, a PSA composition B15 was prepared in the same way as in Example 1. A PSA sheet C15 was produced in the same way as in Example 1, with the exception of using B15 instead of the PSA composition B1.
A PSA composition B15a was prepared in the same way as in composition B15, with the exception of further adding 1 part of acetylacetone (viscosity immediately after preparation: 4.1 Pa·s). Upon pot life evaluation, B15 gelled, and B15a exhibited a viscosity of 0.1 Pa·s.

Example 16

Herein, 2 parts of the same PPG as used in Example 2 were employed instead of the PPG used in Example 1 Otherwise, a PSA composition B16 was prepared in the same way as in Example 1. A PSA sheet C 16 was produced in the same way as in Example 1, with the exception of using 816 instead of the PSA composition B1.
A PSA composition B16a was prepared in the same way as in composition B 16, with the exception of further adding 1 part of acetylacetone (viscosity immediately after preparation: 0.1 Pa·s). Upon pot life evaluation, B16 gelled, and B16a exhibited a viscosity of 0.1 Pa·s.
The PSA sheets produced in Examples 1 to 16 were measured for peel strength and were evaluated for contamination. An overview of the PSA compositions used to prepare the PSA sheets of each example is given in Table 1. The results of the peel strength measurements and contamination evaluation are given in Table 2.

[Measurement of Peel strength]

Two types of polarizing plates consisting of a plain polarizing plate having a width of 70 mm and length of 100 mm (Nitto Denko Corp., TAC polarizing plate, SEG1425DU) and a polarizing plate of the same size provided with an AG coating (Nitto Denko Corp., AG polarizing plate, AGS1) were prepared for use as adherends. The PSA sheet was cut to a width of 25 mm and length of 100 mm for each release liner, and the release liner was removed to expose the PSA surface. This PSA surface was pressed onto the two types of polarizing plates at a pressure of 0.25 MPa and speed of 0.3 m/min each. After allowing to stand for 30 minutes in an environment at 23°C and 50% RH, the polarizing plates were peeled from the PSA sheet under conditions of a peeling speed of 30 m/min and a peeling angle of 180 degrees using a universal tensile tester under the same environmental conditions followed by measurement of peel strength at that time.

[Contamination evaluation]

The PSA sheets were cut to a width of 50 mm and a length of 80 mm for each release liner, and the release liner was removed to expose the PSA surface. The PSA surface was pressure-adhered to the above-described two types of polarizing plate using a hand roller. The whole was left to stand for one week in an environment at 23°C × 50% RH. Thereafter, the PSA sheets were stripped off the adherends by hand. The surface of the adherends after stripping was observed visually in a bright room (ordinary indoor environment illuminated by fluorescent lamps on the ceiling) and in a dark room under a fluorescent lamp (environment with external light blocked off by light-blocking curtains, using a tabletop fluorescent lamp as the only illumination). The contamination state was evaluated according to the following evaluation criteria.
Excellent: no contamination observed either in a bright room or under dark-room fluorescent lamp.
Good: no contamination observed in a bright room, but contamination observed under dark-room fluorescent lamp.
Poor: contamination observed both in a bright room and under dark-room fluorescent lamp.
[Table 1]

| | Oxypropylene group-containing compound | | | Blending amount of oxypropylene group-containing compound with respect to 20 parts by weight of acrylic polymer (parts by weight) |
| --- | --- | --- | --- | --- |
| | Main chain | Structure | Mn | |
| Example 1 | PPG | Diol | 2000 | 0.06 |
| Example 2 | PPG | Diol | 3000 | 0.1 |
| Example 3 | PPG | Triol | 700 | 0.2 |
| Example 4 | PPG | Diol | 3000 | 0.01 |
| Example 5 | PPG-PEG-PPG | Diol | 2000 | 0.02 |
| Example 6 | PPG | Diol | 4000 | 0.1 |
| Example 7 | PPG | Triol | 3000 | 0.1 |
| Example 8 | PPG | Triol | 4000 | 0.1 |
| Example 9 | PPG | Triol | 5000 | 0.1 |
| Example 10 | PPG | Acetyl group | 3000 | 0.1 |
| Example 11 | PPG | Triol | 5000 | 0.1 |
| Example 12 | - | - | - | None |
| Example 13 | - | - | - | None |
| Example 14 | (PEG) | (Diol) | (600) | (0.2) |
| Example 15 | PPG | Diol | 3000 | 0.001 |
| Example 16 | PPG | Diol | 3000 | 2 |

[Table 2]

| | Peel strength (N/25mm) | | Peel strength ratio | Contamination | |
| --- | --- | --- | --- | --- | --- |
| | TAC polarizing plate | AG polarizing plate | | TAC polarizing plate | AG polarizing plate |
| Example 1 | 1.1 | 0.7 | 1.6 | Excellent | Excellent |
| Example 2 | 2.6 | 1.8 | 1.4 | Excellent | Excellent |
| Example 3 | 1.0 | 0.6 | 1.7 | Excellent | Excellent |
| Example 4 | 0.8 | 0.6 | 1.3 | Excellent | Excellent |
| Example 5 | 0.9 | 0.6 | 1.5 | Good | Excellent |
| Example 6 | 1.1 | 1.1 | 1.0 | Excellent | Excellent |
| Example 7 | 1.3 | 1.1 | 1.2 | Excellent | Excellent |
| Example 8 | 1.1 | 1.1 | 1.0 | Excellent | Excellent |
| Example 9 | 0.9 | 0.9 | 1.0 | Excellent | Excellent |
| Example 10 | 1.8 | 1.1 | 1.6 | Excellent | Excellent |
| Example 11 | 0.7 | 0.7 | 1.0 | Excellent | Excellent |
| Example 12 | 1.8 | 0.7 | 2.6 | Excellent | Excellent |
| Example 13 | 4.5 | 1.8 | 2.5 | Excellent | Excellent |
| Example 14 | 1.8 | 0.8 | 2.3 | Excellent | Excellent |

(continued)

| | Peel strength (N/25mm) | | Peel strength ratio | Contamination | |
|---|---|---|---|---|---|
| | TAC polarizing plate | AG polarizing plate | | TAC polarizing plate | AG polarizing plate |
| Example 15 | 1.4 | 0.7 | 2.0 | Excellent | Excellent |
| Example 16 | 0.2 | 0.2 | 1.0 | Poor | Poor |

**[0106]** As Tables 1 and 2 show, the peel strength ratio between a TAC polarizing plate and an AG polarizing plate could be kept smaller than 2, while little contamination was observed in the surface of the adherend (polarizing plate), in the PSA sheets of Examples 1 to 11. The anti-contamination property to the TAC polarizing plate was better in Examples 1 to 4 and Examples 6 to 11, where PPG was used, as compared with Example 5, in which a PPG-PEG-PPG block copolymer was used. Examples 6 to 8 and Example 11, in which PPG diol or triol having Mn ranging from $3 \times 10^3$ to $5 \times 10^3$ was used, exhibited excellent characteristics, namely a peel strength ratio no greater than 1.2 (ranging from 1 to 1.2). This is attributable to the fact that using PPG having a high molecular weight results in a moderate drop in compatibility (but to a degree not detrimental to anti-contamination property), which translates into weaker interactions between the PSA layer and the adherend (polarizing plate). Particularly good results were obtained in the examples where PPG having Mn ranging from $4 \times 10^3$ to $5 \times 10^3$ was used. The PSA sheets according to Examples 1 to 11 exhibited adequate peel strength, from about 0.5 to 3 N/25 mm, in TAC polarizing plates and AG polarizing plates.

**[0107]** By contrast, the PSA sheets according to Examples 12 to 14, which contained no oxypropylene group-containing compound, exhibited a peel strength ratio between a TAC polarizing plate and an AG polarizing plate of 2 or higher (more specifically, 2.3 or higher). The results of Example 14 indicate that using PEG instead of PPG is little effective in reducing differences in adhesiveness. In Example 15, where the blending amount of oxypropylene group-containing compound was excessively low, the effect of reducing differences in adhesiveness was weak. Example 16, where the blending amount of the above-mentioned compound was excessive, exhibited loss of anti-contamination property.

**[0108]** The PSA composition for a surface protective film disclosed herein can be preferably used in applications such as the formation of a PSA (and typically, a PSA layer) provided on various types of surface protective films, or the production of a surface protective film provided with that PSA. In addition, the surface protective film disclosed herein is preferable for applications involving protecting an optical member during production or transport and the like of an optical member used as a constituent element of a liquid crystal display, plasma display panel (PDP) or organic electroluminescence (EL) display and the like. In particular, the surface protective film is useful as a surface protective film applied to an optical member such as a polarizing plate (polarizing film), retardation plate, phase difference plate, optical compensation film, brightness enhancement film, light diffusion film or reflecting sheet for a liquid crystal display.

EXPLANATION OF REFERENCE NUMERALS

**[0109]**

1: support
2: PSA layer
3: release liner
10: surface protective film

**Claims**

**1.** A pressure-sensitive adhesive composition for a surface protective film,
the composition comprising 0.01 to 5 parts by weight of a compound containing an oxypropylene group with respect to 100 parts by weight of an acrylic polymer as a base polymer.

**2.** The composition according to claim 1, wherein the oxypropylene group-containing compound is a compound having a polyoxypropylene segment of two or more consecutive oxypropylene units.

**3.** The composition according to claim 1 or 2, wherein the number-average molecular weight of the oxypropylene group-containing compound ranges from $0.2 \times 10^3$ to $10 \times 10^3$.

4.  The composition according to any one of claims 1 to 3, wherein the oxypropylene group-containing compound is selected from :

    polypropylene glycol; and
    a compound having a polyoxypropylene segment and a polyoxyethylene segment.

5.  The composition according to any one of claims 1 to 4, wherein the acrylic polymer results from copolymerizing an acrylic monomer having a hydroxyl group.

6.  A method of producing a pressure-sensitive adhesive composition for a surface protective film, the method comprising:

    preparing an acrylic polymer as a base polymer; and
    blending thereinto 0.01 to 5 parts by weight of a compound containing an oxypropylene group with respect to 100 parts by weight of the acrylic polymer.

7.  A surface protective film, comprising a pressure-sensitive adhesive layer formed using the pressure-sensitive adhesive composition according to any one of claims 1 to 5 on one or both sides of a support.

8.  The surface protective film according to claim 7, wherein the support is formed of a synthetic resin film having been subjected to an antistatic treatment.

[Fig 1]

FIG.1

2
1

10

[Fig 2]

FIG.2

3
2
1

10

| | | International application No. |
|---|---|---|
| **INTERNATIONAL SEARCH REPORT** | | PCT/JP2010/052648 |

**A.  CLASSIFICATION OF SUBJECT MATTER**
*C09J133/00*(2006.01)i, *C09J7/02*(2006.01)i, *C09J171/02*(2006.01)i

According to International Patent Classification (IPC) or to both national classification and IPC

**B.   FIELDS SEARCHED**

Minimum documentation searched (classification system followed by classification symbols)
C09J1/00-201/10

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| X | JP 2007-63298 A  (Nippon Carbide Industries Co., Inc.), 15 March 2007 (15.03.2007), claims 9 to 12, 16; paragraphs [0041], [0042], [0052]; examples 1 to 5; comparative example | 1-8 |
| | | 1-8 |

☒  Further documents are listed in the continuation of Box C.   ☐  See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 April, 2010 (08.04.10) | 20 April, 2010 (20.04.10) |

| Name and mailing address of the ISA/<br>   Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/052648 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2005-325255 A  (Nitto Denko Corp.),<br>24 November 2005 (24.11.2005),<br>claims 1, 3, 7; paragraphs [0040] to [0042];<br>example 3<br>& US 2005/0256251 A1    & EP 1595929 A1<br>& KR 10-2006-0047825 A   & CN 1696230 A | 1-8 |
| X<br>A | JP 2008-1838 A  (Mitsui Chemicals, Inc.),<br>10 January 2008 (10.01.2008),<br>claim 1; paragraphs [0037], [0039]; example 5;<br>table 1<br>(Family: none) | 1-7<br>8 |
| X<br>A | JP 10-189504 A  (Mitsui Chemicals, Inc.),<br>21 July 1998 (21.07.1998),<br>claims 8, 10, 13, 14; example 7<br>(Family: none) | 1-7<br>8 |
| A | JP 2008-44984 A  (Toyo Ink Manufacturing Co.,<br>Ltd.),<br>28 February 2008 (28.02.2008),<br>claims; paragraphs [0017], [0031], [0038],<br>[0039]; examples 1, 2; tables 1, 2<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009043988 A
- JP 2010030117 A
- JP 2008069261 A
- JP 2005023143 A
- JP H11116927 B